# EUROPEAN PATENT APPLICATION

(11) **EP 2 821 762 A1**
(43) Date of publication of application: **07.01.2015**
(21) Application number: 13174853.5
(22) Date of filing: 03.07.2013
(51) Int. Cl.: G01J 3/02

(54) **Process of measuring color properties of an object using a mobile device**

(71) Applicant: Akzo Nobel Coatings International B.V., 6824 BM Arnhem (NL)
(72) Inventor: Kirchner, Eric Jacob Jan, NL-2318 TG Leiden (NL)
(74) Representative: Akzo Nobel IP Department

(57) **Abstract**

The invention relates to a process of measuring the visual properties including at least the color of an object (6), using a mobile device (1) having a built-in digital camera having a lens, a data processing unit, and user-installed software for processing electronic images, wherein the process comprises the steps of
a) capturing an electronic image of the object with the digital camera,
b) processing the electronic image by the software to compute at least color parameters,
c) outputting at least the color parameters on an electronic display, wherein the electronic display is the display of the mobile device or a remote display in data connection with the mobile device,

wherein a set-up tool (5) having i) an interior surface defining an interior space, ii) a lens opening and iii) an object opening, and providing controlled lighting conditions to the part of the substrate of which an electronic image is captured, and wherein the lens opening of the tool is attached to the lens of the digital camera, and the object opening of the tool is attached to the part of the object of which an electronic image is captured, without obstructing the optical path between the lens and the part of the object of which an electronic image is captured.

## Description

The invention relates to a process of measuring visual properties of an object using a mobile device, and to the use of the process in selecting a matching paint.

The determination of the visual properties of an object, in particular color, is useful in many fields, in particular where the color of objects or paint has to be matched to existing colors, for example in the field of interior decoration for buildings, but also in the field of interior and exterior parts of automobiles. Color and texture matching is of particular importance in the field of repair of exterior damages of automobiles. For this purpose, it is required to find a repair paint which as precisely as possible matches the visual properties of the original paint of the automobile. Otherwise, a repaired spot will be visibly different from the surrounding original paint.

Accurate measurement of the visual properties of an object is generally assumed to require dedicated instruments. Suitable instruments are for example spectrophotometers. However, such instruments are expensive. As a consequence, such instruments are not available at all locations where color measurements are desirable. Furthermore, instruments dedicated instruments with sufficient accuracy are sometimes required specifically trained users for proper calibration, data handling, and interpretation of results.

It is also known that applications for color determination can be installed on so-called smart-phones. Actually, there are many so-called apps available related to color and color measurement on mobile devices, for example for the Android platform the apps My Pantone (from the company X-Rite), Color Grab (by Loomatix), Color Snap (from Sherwin Williams), Color Capture (by Benjamin Moore), or Color Smart (by Behr). However, the use of smart-phones or tablet computers in combination with specific applications is generally considered to lack accuracy when it comes to measuring color.

Accordingly, there exists a need for a process of measuring the visual properties of an object using a readily available device, such as a smart-phone, having improved accuracy, and which is easy and simple to carry by consumers and technicians, without the need for a specific training or skills.

The invention now provides a process of measuring the visual properties including at least the color of an object, using a mobile device having a built-in digital camera having a lens, a data processing unit, and user-installed software for processing electronic images, wherein the process comprises the steps of
a) capturing an electronic image of the object with the digital camera,
b) processing the electronic image by the software to compute at least color parameters,
c) outputting at least the color parameters on an electronic display, wherein the electronic display is the display of the mobile device or a remote display in data connection with the mobile device,
wherein a set-up tool having i) an interior surface defining an interior space, ii) a lens opening and iii) an object opening, and providing controlled lighting conditions to the part of the substrate of which an electronic image is captured, and wherein the lens opening of the tool is attached to the lens of the digital camera, and the object opening of the tool is attached to the part of the object of which an electronic image is captured, without obstructing the optical path between the lens and the part of the object of which an electronic image is captured.

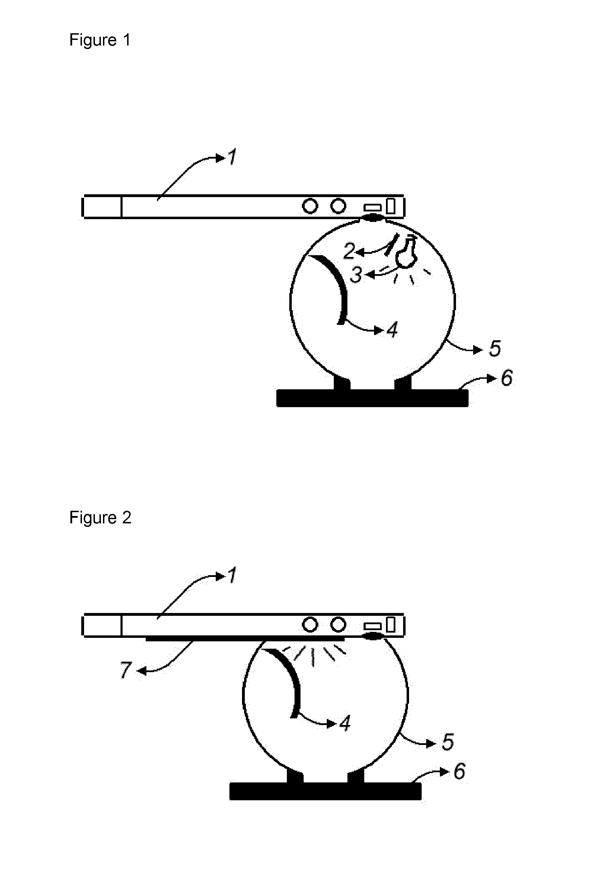

Figure 1 shows an embodiment of the process wherein a set-up tool (5) is positioned between the lens of the digital camera of a mobile device (1) and an object (6). The set-up tool (5) is provided with a baffle (2), a light source (3) in the interior space, and a curved mirror (4).

Figure 2 shows an embodiment wherein the illumination of the object (6) is provided by a light-emitting electronic display (7) of the mobile device (1).

With the process of the invention for color measurement, accurate color measurement is possible at much lower costs than with currently available methods for accurate color measurements using spectrophotometers. This makes accurate color measurement available for a larger group of consumers and businesses. The new process may be used with great advantage in the area of on-line retail, where color deviations contribute significantly to customer dissatisfaction. Other examples of markets that would benefit from ubiquitous accurate color measurements are the furniture industry, the decorative wall paint industry, the graphical and textile industry, and car refinishes, where current spectrophotometers are too expensive for a majority of bodyshops in developed countries and in emerging markets.

Examples of suitable mobile devices are personal mobile electronic devices, such as digital assistants, so-called smart phones, tablet computers and other similar computing devices. The mobile device generally is a small, all-in-one device that is used for communication and computing functions. The device allows a user to choose the applications that he wants to install and use. The device is also provided with a camera that can record static and, optionally, moving images. The device includes a memory device for storing programs, applications and data, as well as a processor for processing data. The mobile device may be equipped with a touch screen as a primary input device and have a wireless adapter for internet and local network connection.

As mentioned above, the process includes measuring the visual properties of an object, wherein the visual properties include at least the color of the object.

In many cases, the visual properties of objects are sufficiently defined by the color. However, there are also objects of which the visual properties are insufficiently defined when only colour is taken into account. This is the case when the surface of the object has an inhomogeneous color, or when the surface of the object is textured. Texture includes the surface morphology, but also inhomogeneous structures in the place of the surface, for example a coating layer including metallic effect pigments.

For such objects, it is preferred that in steps b) and c) of the process a texture parameter is additionally computed and output to the display, respectively.

A particular advantage of the process is that the distance between the lens of the digital camera and the object is fixed due to the dimensions of the set-up tool. Therefore, texture parameters can be determined with improved accuracy.

On the mobile device, the user may install software that is able to process the electronic images taken by the camera and extract visual properties. For extracting color properties, such extraction methods are well known. For example, the so-called sRGB display system as defined in the International Standard IEC 61966-2-1 provides an algorithm to convert the commonly used RGB color coordinates of electronic images into CIE tristimulus values X, Y and Z. These in turn can be converted into more common colorimetric color coordinates such as CIE-Lab. This method is described in text books on Colorimetry, such as p. 222 of R.S. Berns, "Billmeyer and Saltzmann's Principles of Color Technology", Third Edition, Wiley-Interscience, New York, 2000. Another example of such a description is p. 31 of P. Bodrogi and T.Q. Khanh, "Illumination, Color and Imaging", Wiley-VCH Verlag, Weinheim, 2012.

These methods for extracting color properties from an electronic image necessarily need to make assumptions of the lighting conditions during capturing of the image. For example, the conversion from RGB to XYZ coordinates mentioned before depends on the spectral power distribution of the light falling on the scene. By controlling the illumination, using the set-up tool described in herein, the conversion can be made with much higher accuracy.

For extracting texture properties from an electronic image, several methods have been proposed in the literature. For example, in R.M. Haralick, K. Shanmugam and I. Dinstein, "Textural features for image classification", IEEE Transactions on systems, Man and cybernetics 3 (1973) 610-621, the authors propose a large number of textural features and the algorithms that can be used to extract those texture properties from an electronic image. In S. Kitaguchi, S. Westland, M.R. Luo, E.J.J. Kirchner and G.J. van den Kieboom, "Application of HDR Imaging to modeling of glints in metallic coatings", the authors describe a method to extract a particular form of texture (called glints or sparkle) from digital images taken from automotive paints. Since the texture phenomenon often depends strongly on the illumination angle of a sample, it is beneficial if the lighting is well controlled, as is accomplished with the set-up tool described in herein.

In one embodiment, the interior surface of the set-up suitably is non-reflective for visible light. The absence of reflections in the interior part of the set-up tool makes it possible to operate under well-defined illumination and viewing angles. This may be important when measuring for example metallic effect coatings.

In another embodiment, the interior of the set-up is highly reflective for visible light. The multiple reflections in the interior part of the set-up tool will provide diffuse lighting to the sample, thereby eliminating the variability of gloss and thus improving the improves accuracy and repeatability of the measurement of the visual properties of the object.

This embodiment may be most suitable when measuring non-textured solid colors. In a preferred embodiment, the interior surface of the set-up tool is white, grey or mirror-like.

The interior surface of the set-up tool may have any suitable shape. Examples of suitable shapes are cube-like shapes, prism-like shapes, tube-like shapes, or spherical shapes. In one embodiment, the interior surface is essentially spherical, and the lens opening and the object opening are located at essentially antipodal points.

In step c) of the process, at least color parameters are output on an electronic display. The color parameters may be provided in any form which is suitable to give the user information about the color. In one embodiment, the color parameters may be numeric values, for example coordinates in a color space as described above. In an alternative embodiment, a verbal description of the color may be provided. I a still further embodiment, the color of the object may be compared to colors in a database, and the output may be a color from the database having the closest match to the color of the object. The output may also be in the form of an image of the closest match.

It is generally desirable that illumination of the part of the object of which an electronic image is captured in provided in a controlled and reproducible manner. This improves the accuracy of the process of measuring.

In one embodiment of the process, illumination of the part of the object of which an electronic image is captured is provided by a light source in the interior space of the set-up tool. Suitable light sources include light emitting diodes, fluorescent lamps, and light bulbs. Generally, light sources of small size and low energy consumption are preferred, such as light emitting diodes. The electric power required may be provided by a battery included in the set-up tool. Alternatively, the energy may be provided by the battery of the mobile device. In a preferred embodiment, the light source is positioned in the interior of the set-up tool in such a way to prevent light from the light source falling directly into the camera lens. In one embodiment, this may be achieved by a baffle positioned between the light source and the lens.

Alternatively, illumination of the part of the object of which an electronic image is captured is provided by a light source of the mobile device. Many mobile devices having a digital camera also have an integrated flash light for illumination of objects to be photographed. Often, the flash light is positioned close to or next to the lense of the digital camera. Therefore, in one embodiment, illumination is provided by a flash light for the digital camera of the mobile device. In this case, the lens opening of the set-up tool is suitably sufficiently wide to enclose the lens of the digital camera as well as the flash light.

Many mobile devices also have a digital camera installed on the face of the electronic display, and the electronic display generally is adapted to emit light. Therefore, in a further embodiment, illumination is provided by the electronic display of the mobile device. In this case, the lens opening of the set-up tool is suitably sufficiently wide to enclose the lens of the digital camera as well as at least a part of the display of the mobile device.

The light of the display may be varied over a range of well-controlled colors, in each case using to a different color capturing. The combination of differently colored lights can be used to determine the color more accurately.

In a still further embodiment, illumination of the part of the object of which an electronic image is captured is provided by at least one window in the set-up tool allowing the transmission of ambient light. The ambient light may optionally be transmitted through an optical element, such as a lens, a prism, or a shutter, a filter, or combinations thereof.

Such optical elements may lead to a better control of the spectral properties of the ambient light used for illumination of the object, and hence to a higher accuracy of the process of measuring.

In a still further embodiment, a curved mirror is positioned in the interior space of the tool, wherein the mirror does not obstruct the optical path between the lens opening and the object opening. The curved mirror allows capturing an image under a variety of viewing angles.

The shape and size of the set-up tool may vary. Generally, the set-up tool is configured to provide a certain distance the lens of the camera of the mobile device and the object. That distance generally is in the range between 2 and 20 cm, typically between 3 and 8 cm. This contributes to making the set-up tool conveniently small to be carried by a user, while ensuring that sufficient data is represented in the image taken by the camera of the mobile device as to compute color parameters. Generally, the size and shape of the set-up tool should be such that the image of the object occupies at least ten percent of the camera image. In embodiments without representations of the calibration-colored surface, the preferred size and design of the set-up tool is such that the image of the object occupies close to a hundred percent of the camera image.

In another embodiment, inside the set-up tool a calibration-colored surface is included on a place such that every digital image taken by the camera also includes a representation of the calibration-colored surface. The image of the calibration coloured surface is used to improve the accuracy of the computed color parameters. The calibration coloured surface may include one calibration color, or a plurality of calibration colours. Using more than one calibration color generally improves the accuracy. The calibration colored surface may be an object which is located in the interior space of the set-up tool. In one embodiment, the calibration colored surface is implemented as part of the interior surface of the set-up tool.

In one embodiment, the computed color parameters are compared to color parameters of colors in a database. A colour from the database having a close match with the colour of the object may be selected on the basis of color parameters. As mentioned above, such an embodiment can be used for selecting matching colours, for example from a database containing a color collection, in a variety of businesses. In further embodiments, candidate matching color recipes or color formulae or images of matching paints may be presented to the user. In some embodiments, additional data associated to a matching paint may be displayed, such as an associated car brand, a model, or a production year or range of production years.

## Claims

1. A process of measuring the visual properties including at least the color of an object , using a mobile device having a built-in digital camera having a lens, a data processing unit, and user-installed software for processing electronic images, wherein the process comprises the steps of
a) capturing an electronic image of the object with the digital camera,
b) processing the electronic image by the software to compute at least color parameters,
c) outputting at least the color parameters on an electronic display, wherein the electronic display is the display of the mobile device or a remote display in data connection with the mobile device,
wherein a set-up tool having i) an interior surface defining an interior space, ii) a lens opening and iii) an object opening, and providing controlled lighting conditions to the part of the substrate of which an electronic image is captured, and wherein the lens opening of the tool is attached to the lens of the digital camera, and the object opening of the tool is attached to the part of the object of which an electronic image is captured, without obstructing the optical path between the lens and the part of the object of which an electronic image is captured.

2. The process according to claim 1, wherein the interior surface of the set-up tool is white.

3. The process according to claim 1 or 2, wherein the interior surface of the set-up tool is essentially spherical, and wherein the lens opening and the object opening are located at essentially antipodal points.

4. The process according to any one of the preceding claims, wherein illumination of the part of the object of which an electronic image is captured is provided by a light source in the interior space of the set-up tool.

5. The process according to any one of the preceding claims, wherein illumination of the part of the object of which an electronic image is captured is provided by a light source of the mobile device.

6. The process according to claim 5, wherein illumination is provided by a flash light for the digital camera of the mobile device.

7. The process according to claim 5, wherein the mobile device has a light emitting electronic display, and wherein the illumination is provided by the electronic display of the device.

8. The process according to any one of the preceding claims, wherein illumination of the part of the object of which an electronic image is captured is provided by at least one window in the set-up tool allowing the transmission of ambient light, wherein the ambient light is optionally transmitted through an optical element.

9. The process according to any one of the preceding claims, wherein a curved mirror is positioned in the interior space of the tool, wherein the mirror does not obstruct the optical path between the lens opening and the object opening.

10. The process according to any one of the preceding claims, wherein the computed color parameters are compared to color parameters of colors in a database, and wherein a colour from the database having a close match with the colour of the object is selected on the basis of color parameters.

11. The process according to any one of the preceding claims, wherein inside the set-up tool a calibration-colored surface is included on a place such that every digital image taken by the camera also includes a representation of the calibration-colored surface, and wherein the image of the calibration coloured surface is used to improve the accuracy of the computed color parameters.

12. The process according to any one of the preceding claims, wherein in steps b) and c) a texture parameter is additionally computed and output to the display, respectively.

13. Use of the process according to any one of the preceding claims for selecting a paint matching the visual properties of the object.
